# EUROPÄISCHE PATENTANMELDUNG

(11) **EP 2 028 461 A1**
(43) Veröffentlichungstag der Anmeldung: **25.02.2009**
(21) Anmeldenummer: 08013523.9
(22) Anmeldetag: 28.07.2008
(51) Int. Cl.: G01G 23/00

(54) **Nivelliereinrichtung zur Einstellung der horizontalen Lage einer Vorrichtung sowie mobile Wiegeeinrichtung mit solcher Nivelliereinrichtung**

(30) Priorität: 30.07.2007 DE 102007035949
(71) Anmelder: Soehnle Professional GmbH & Co. KG, 71522 Backnang (DE)
(72) Erfinder: Gerster, Stephan, 53343 Wachtberg-Pech (DE)

(57) **Zusammenfassung**

Es wird eine Nivelliereinrichtung angegeben, mit der sich die horizontale Lage einer Vorrichtung, insbesondere eines Neigungssensors (1), mit hoher Genauigkeit einstellen lässt. Dabei ist in erfindungsgemäßer Weise die Lage der Vorrichtung in Bezug auf eine erste horizontale Achse unabhängig von der Lage der Vorrichtung in Bezug auf eine zweite horizontale Achse einstellbar. Des Weiteren wird eine mobile Wiegeeinrichtung vorgeschlagen, die eine erfindungsgemäße Nivelliereinrichtung aufweist. Mit der mobilen Wiegeeinrichtung ist einerseits eine genaue Kalibrierung eines Neigungssensors (1) ermöglicht. Zum anderen ist die mobile Wiegeeinrichtung besonders geeignet zur Durchführung von Gewichtsmessungen auf unebenem Untergrund, da ein genau kalibrierter Neigungssensor zur Korrektur der Messwerte vorgesehen werden kann.

## Beschreibung

Die Erfindung betrifft eine Nivelliereinrichtung zur Einstellung der horizontalen Lage einer Vorrichtung, insbesondere eines Neigungssensors, wobei die Vorrichtung auf der Nivelliereinrichtung anordenbar ist. Des Weiteren betrifft die Erfindung eine mobile Wiegeeinrichtung.

Eine Nivelliereinrichtung der eingangs genannten Art kann dazu dienen, die horizontale Lage einer beliebigen Vorrichtung genau einzustellen. Üblicherweise möchte man dabei eine - wie auch immer geartete - Vorrichtung genau horizontal ausrichten, so dass keinerlei Schrägstellung der Vorrichtung eintritt.

Zur horizontalen Ausrichtung ist eine Mechanik bekannt, wie sie bspw. bei Tischen verwendet wird. Dabei kann ein "Wackeln" des Tisches verhindert werden, indem zumindest eines von insgesamt vier Tischbeinen in der Länge variabel ausgestaltet ist. Durch die geeignete Anpassung der Länge des einen Tischbeins steht der Tisch sicher, es ist damit jedoch noch keine genaue horizontale Ausrichtung der Tischplatte sichergestellt, da die horizontale Lage von der Länge der anderen Tischbeine abhängt.

Eine genaue horizontale Ausrichtung ist insbesondere bei der Kalibrierung und dem Einsatz von Neigungssensoren erforderlich. Neigungssensoren werden bei vielfältigen Anwendungsfällen verwendet, um die horizontale Lage eines Objekts anzugeben oder um die Abweichung beliebiger Messwerte aufgrund der Schrägstellung eines messenden oder zu messenden Objekts zu ermöglichen.

Der Einsatz solcher Neigungssensoren in mobilen Wiegeeinrichtungen ist dabei ganz besonders vorteilhaft. Bei einer mobilen Wiegeeinrichtung kann es sich bspw. um eine Waage handeln, die fahr- oder rollbar ist. Aufgrund eines ungleichmäßig beschaffenen Untergrunds kann es beim Wiegevorgang zu einer Schrägstellung der mobilen Wiegeeinrichtung kommen. Dadurch können jedoch erhebliche Fehler bei der Bestimmung des Gewichtswerts auftreten. Selbst bei einer geringen Neigung der Wiegefläche gegen die Horizontale wird hierbei eine Abweichung von regelmäßig über 10% festgestellt.

Verfügt die mobile Wiegeeinrichtung jedoch über einen Neigungssensor, kann unter Zugrundelegung eines momentanen Neigungswerts und einer geeigneten Kalibrierkurve eine Korrektur des Messwerts der Wiegeeinrichtung erfolgen.

Zur Aufnahme einer Kalibrierkurve und zur Sicherstellung einer einwandfreien Funktion des Neigungssensors ist es jedoch erforderlich, den Neigungssensor innerhalb der Wiegeeinrichtung genau horizontal zu justieren.

Der vorliegenden Erfindung liegt daher die Aufgabe zugrunde, eine Nivelliereinrichtung sowie eine mobile Wiegeeinrichtung anzugeben, wobei eine genaue Einstellung der horizontalen Lage einer Vorrichtung ermöglicht ist und wobei der Einfluss einer Schrägstellung auf die Ermittlung von Messwerten kompensierbar ist.

Diese Aufgabe wird in Bezug auf eine Nivelliereinrichtung mit den Merkmalen des Patentanspruchs 1 gelöst. Danach ist eine Nivelliereinrichtung der eingangs genannten Art dadurch gekennzeichnet, dass die Lage der Vorrichtung in Bezug auf eine erste horizontale Achse unabhängig von der Lage der Vorrichtung in Bezug auf eine zweite horizontale Achse einstellbar ist.

Erfindungsgemäß ist erkannt worden, dass eine besonders genaue Einstellung der horizontalen Lage einer Vorrichtung erreicht ist, falls die Einstellung der Lage der Vorrichtung in Bezug auf eine erste Achse von der Einstellung der Lage der Vorrichtung in Bezug auf eine zweite Achse entkoppelt ist.

Raffinierterweise kann dabei die Lage der Vorrichtung in Bezug auf eine Achse verändert werden, ohne dass die Lage der Vorrichtung in Bezug auf die zweite Achse verändert wird. Dabei liegen jedoch beide Achsen jeweils in einer horizontal ausgerichteten Ebene. Beide Achsen können nun in derselben Ebene liegen, andererseits ist es möglich, dass die Achsen in vertikaler Richtung beabstandet sind, so dass eine unabhängige Einstellung der horizontalen Lage in mehreren Kalibrierebenen der erfindungsgemäßen Nivelliereinrichtung stattfinden kann.

Es ist selbstverständlich, dass die erfindungsgemäße Nivelliereinrichtung durch Kippen oder durch eine entsprechend geeignete Konstruktion auch zur Einstellung der vertikalen Lage einer beliebigen Vorrichtung geeignet ist, und zwar ohne vom Erfindungsgedanken abzuweichen.

In bevorzugter Weise sind die erste horizontale Achse und die zweite horizontale Achse im Wesentlichen senkrecht zueinander orientiert. Die Einstellung der horizontalen Lage der Vorrichtung kann demnach anhand eines Koordinatensystems mit senkrechten Achsen vollzogen werden.

In einer bevorzugten Weiterbildung weist die erfindungsgemäße Nivelliereinrichtung eine erste Platte auf, die um die erste horizontale Achse schwenkbar an einer Grundplatte oder dgl. Unterlage angelenkt ist, wobei die Platten im Wesentlichen parallel angeordnet sind. Mit anderen Worten ist die erste Platte über der Grundplatte oder oberhalb einer beliebigen anderen geeigneten Unterlage angeordnet.
Dabei verlaufen die Platten im Wesentlichen parallel. Durch Schwenken der ersten Platte wird gleichzeitig die horizontale Lage einer auf der Nivelliereinrichtung angeordneten Vorrichtung in Bezug auf die erste horizontale Achse verändert.

Eine besonders bevorzugte Weiterbildung weist zusätzlich eine zweite Platte auf, die um die zweite horizontale Achse schwenkbar an der ersten Platte angelenkt ist,
wobei die zweite und die erste Platte ebenfalls im Wesentlichen parallel angeordnet sind. Bei dieser Ausführungsform weist die erfindungsgemäße Nivelliereinrichtung drei Platten auf, die im Wesentlichen parallel zueinander und in vertikaler Richtung übereinander beabstandet vorliegen. Die horizontale Lage der zweiten, oberen Platte ergibt sich dabei im Ergebnis aus der Auslenkung der ersten Platte gegenüber der Grundplatte und der Auslenkung der zweiten Platte gegenüber der ersten Platte. Dabei werden die jeweiligen Auslenkungen streng getrennt nach den jeweiligen horizontalen Drehachsen vorgenommen. In erfindungsgemäßer Weise hat die Auslenkung der ersten Platte keinen Einfluss auf die Auslenkung der zweiten Platte in Bezug auf die erste Platte. Die horizontale Lage der zweiten Platte und damit auch einer Vorrichtung, die auf der Nivelliereinrichtung anordenbar ist, ist damit je nach horizontaler Drehachse getrennt voneinander einstellbar. Bei den Platten kann es sich um Bleche, Bretter oder dgl. geeignete Unterlagen handeln.

In einer weiteren Ausführungsform ist die erste Platte mit der Grundplatte und/oder ist die zweite Platte mit der ersten Platte über jeweils ein Gelenk verbunden. Dabei erstreckt sich das Gelenk bevorzugt in Richtung der jeweiligen horizontalen Drehachse und erlaubt eine Verschwenkbarkeit der jeweiligen Platten um diese Drehachse.

In einer bevorzugten Ausgestaltung beaufschlagt das Gelenk bzw. beaufschlagen die Gelenke die verbundenen Platten mit einer in Richtung der Vergrößerung des Plattenabstands wirkenden Kraft. Mit anderen Worten drückt das Gelenk die über das Gelenk verbundenen Platten auseinander. Dadurch kann eine Einstellung des Plattenabstands durch einfaches Betätigen einer geeigneten Stelleinrichtung erfolgen.

Zur Beaufschlagung der Platten mit der genannten Kraft kann das Gelenk bzw. können die Gelenke eine Feder, insbesondere ein Biegeblech, aufweisen.

In einer besonders bevorzugten Ausgestaltung des Erfindungsgedankens ist der horizontale Abstand der ersten Platte und der Grundplatte und/oder ist der horizontale Abstand der zweiten Platte und der ersten Platte über jeweils einen Abstandshalter, insbesondere eine Stellschraube, einstellbar. Die Stellschraube kann dabei gegen eine Federkraft des Gelenks wirken. Vorzugsweise ist die Stellschraube vom Gelenk ausreichend beabstandet, befindet sich bspw. auf der dem Gelenk gegenüberliegenden Hälfte der jeweiligen Platte.

Dabei ist bevorzugt, dass der bzw. die Abstandshalter so ausgebildet ist bzw. sind, dass die Platten unabhängig von dem durch die Platten gebildeten Winkel beabstandbar sind. Dies bedeutet mit anderen Worten, dass der jeweilige Abstandshalter, insbesondere eine Stellschraube, so ausgebildet ist, dass eine Winkeländerung zwischen den Platten aufgrund einer Veränderung des Plattenabstands keinen Einfluss auf die Einstellbarkeit des Abstandshalters bzw. der Stellschraube hat. Dies bedeutet insbesondere, dass im Abstandshalter keine unerwünschten Biegekräfte auftreten. Dazu kann der Abstandshalter in der ersten Platte verschraubt sein, kann die zweite Platte jedoch - bspw. über geeignete Unterlegscheiben - so festlegen, dass eine Winkeländerung zwischen der Längsachse des Abstandshalters und der zweiten Platte ermöglicht ist.

Die oben aufgezeigte Aufgabe ist in Bezug auf eine mobile Wiegeeinrichtung mit den Merkmalen des Patentanspruchs 10 gelöst. Danach weist eine erfindungsgemäße mobile Wiegeeinrichtung eine erfindungsgemäße Nivelliereinrichtung auf. Die erfindungsgemäße mobile Wiegeeinrichtung kann nun über die vorhandene Nivelliereinrichtung einen Neigungssensor aufnehmen. Der Neigungssensor lässt sich danach innerhalb der mobilen Wiegeeinrichtung genau horizontal ausrichten, bspw. wenn die mobile Wiegeeinrichtung sich selber auf einem horizontalen Untergrund befindet. Damit kann ein Referenzwert des Neigungssensors für eine genaue horizontale Lage der mobilen Wiegeeinrichtung aufgenommen werden.

Andererseits lässt sich mit der vorhandenen Nivelliereinrichtung eine beliebige horizontale Neigung eines Neigungssensors einstellen und so eine Kalibrierkurve aufnehmen, die den Ausgabewert des Neigungssensors für eine bestimmte Neigung wiedergibt. Sofern eine entsprechende Kalibrierkurve für die Ermittlung und die Anzeige des zu messenden Gewichtswertes vorliegt, kann danach eine Angleichung der Kalibrierkurven derart erfolgen, dass trotz einer beliebigen Schrägstellung der erfindungsgemäßen mobilen Wiegeeinrichtung stets der genaue Gewichtswert des zu wiegenden Guts anzeigbar ist.

Daher ist eine erfindungsgemäße mobile Wiegeeinrichtung bevorzugt, die einen solchen Neigungssensor enthält.

Der Neigungssensor kann dabei auf der zweiten Platte der Nivelliereinrichtung angeordnet sein. Dabei lässt sich die horizontale Ausrichtung des Neigungssensors in der bereits genannten Art und Weise einstellen.

Bei einer bevorzugten Ausführungsform der mobilen Wiegeeinrichtung ist die Nivelliereinrichtung abgekapselt und/oder versiegelt. Die Nivelliereinrichtung und damit ein enthaltener Neigungssensor ist so vor unbefugtem Zugriff geschützt. Erfolgt dennoch ein solcher Zugriff bzw. eine Manipulation des Neigungssensors, kann diese Manipulation aufgrund des Bruchs einer Versiegelung oder einer Verplombung entdeckt werden. Die Abkapselung, Versiegelung und/oder Verplombung der Nivelliereinrichtung und damit eines enthaltenen Neigungssensors kann nach der Aufnahme von entsprechenden Kalibrierkurven erfolgen. Danach ist eine fehlerfreie und manipulationssichere Funktion der mobilen Wiegeeinrichtung sichergestellt.

In besonders bevorzugter Weise ist die mobile Wiegeeinrichtung als Hebebühne, insbesondere zur Beladung von Flugzeugen, ausgebildet. Bei der Beladung von Passagier- oder Frachtflugzeugen ergeben sich im Allgemeinen zwei Probleme, die von der vorliegenden Erfindung in besonders überzeugender Art gelöst werden. Zum einen ist es aus Sicherheitsgründen unverzichtbar, sowohl die Verteilung des Frachtgewichts innerhalb des Flugzeugs als auch das Gesamtgewicht der Fracht genau zu kennen und überwachen zu können. Zusätzlich ist die Detektion von fehlenden oder sogar überzählig vorhandenen Gepäckstücken beim Beladen von Flugzeugen wünschenswert. Das zweite Problem liegt darin begründet, dass im mobilen Einsatz auf dem Rollfeld eine genaue Gewichtsbestimmung der zu verladenden Fracht im Allgemeinen nur schwer möglich ist. Ist jedoch die zur Beladung des Flugzeugs verwendete Hebebühne (die im Allgemeinen als Scherenhubtisch o.ä. ausgeführt ist) gemäß der vorliegenden Erfindung als mobile Wiegeeinrichtung ausgestaltet, kann während des Verladens eine genaue Bestimmung des Gewichts der Fracht erfolgen. Dabei kann die Auflagefläche für das Frachtgut gleichzeitig als Wiegefläche ausgestaltet sein, bspw. indem unter der Fläche mehrere Messzellen angeordnet werden. Dabei tritt keine Zeitverzögerung ein, da die Gewichtsbestimmung während des Ladevorgangs ermöglicht ist. Eine Verfälschung der Messwerte aufgrund einer ungleichmäßigen Oberfläche des Rollfelds und damit einer Schrägstellung der mobilen Wiegeeinrichtung ist durch die vorliegende Erfindung ausgeschlossen.

Selbstverständlich kann die erfindungsgemäße Wiegeeinrichtung auch in Hebebühnen von Lastwagen, in Außen- und Möbelaufzügen oder dgl. vorgesehen werden, d.h. immer in solchen Fällen, bei denen eine möglichst genaue mobile Gewichtsbestimmung auf unebenem Untergrund erfolgen soll.

Demgemäß kann die mobile Wiegeeinrichtung auch als Leiter, Gerüst oder dgl. ausgebildet sein.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche und andererseits auf die nachfolgende Erläuterung eines bevorzugten Ausführungsbeispiels der erfindungsgemäßen Nivelliereinrichtung anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der erfindungsgemäßen Nivelliereinrichtung und der erfindungsgemäßen mobilen Wiegeeinrichtung erläutert. In der Zeichnung zeigen
- Fig. 1: eine perspektivische Vorderansicht einer bevorzugten Ausführungs-form der erfindungsgemäßen Nivelliereinrichtung mit einem hierauf angeordneten Neigungssensor,
- Fig. 2: eine Explosionsdarstellung der in Fig. 1 gezeigten Nivelliereinrichtung,
- Fig. 3: die linke Seitenansicht der Ausführungsform aus den Fig. 1 und 2, und
- Fig. 4: eine Schnittansicht des Details A aus Fig. 3, wobei eine besonders bevorzugte Stellschraube als Abstandshalter gezeigt ist.

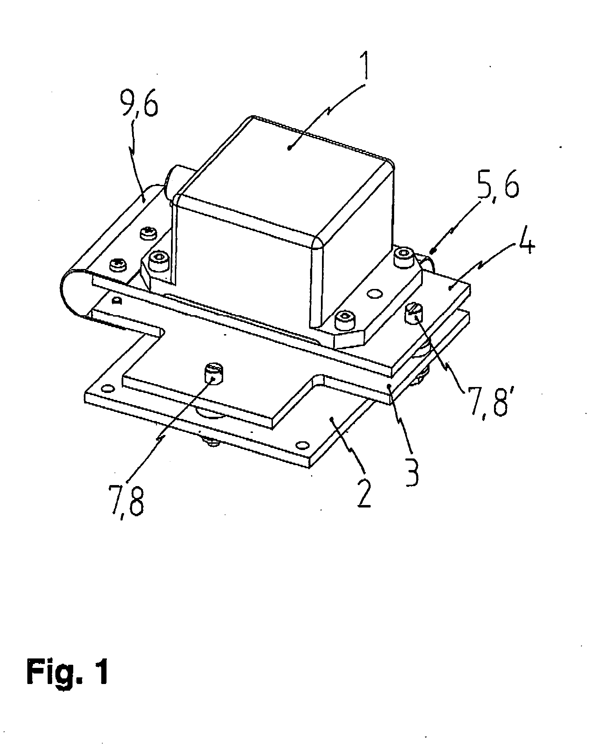

Fig. 1 zeigt eine perspektivische Vorderansicht einer besonders bevorzugten Ausführungsform der erfindungsgemäßen Nivelliereinrichtung. Auf der Nivelliereinrichtung ist ein Neigungssensor 1 angeordnet. Der Neigungssensor 1 lässt sich mit der gezeigten Nivelliereinrichtung mit höchster Genauigkeit horizontal ausrichten. Des Weiteren kann der Neigungssensor 1 mit hoher Genauigkeit mit einem gewünschten Winkel gegen die horizontale Ebene geneigt werden.

Die Nivelliereinrichtung verfügt zunächst über drei plattenartige Bauteile. Ganz unten ist die Grundplatte 2 angeordnet. Über der Grundplatte 2 liegt die erste Platte 3.
Darüber findet sich die zweite Platte 4, auf der der Neigungssensor 1 festgeschraubt ist. Sämtliche Platten 2, 3, 4 sind im Wesentlichen parallel zueinander ausgerichtet und vertikal voneinander beabstandet.

Die erste Platte 3 ist über ein erstes Gelenk 5 an der Grundplatte 2 angelenkt. Dieses erste Gelenk 5 verläuft in horizontaler Richtung am hinteren Ende der Nivelliereinrichtung, so dass in dieser Darstellung nur ein kleiner Teil des ersten Gelenks 5 zu sehen ist. Das erste Gelenk 5 ist als Biegeblech 6 ausgestaltet. Das erste Gelenk 5 erlaubt das Verschwenken der ersten Platte 3 gegen die Grundplatte 2, wobei das erste Gelenk 5 eine erste horizontale Drehachse vorgibt, die von links nach rechts verläuft.

Zur Einstellung der Verschwenkung der ersten Platte 3 ist in dem vom ersten Gelenk 5 abgewandten Bereich der Grundplatte 2 sowie der ersten Platte 3 ein Abstandshalter 7 vorgesehen, der als Stellschraube 8 ausgebildet ist. Mit der Stellschraube 8 lässt sich ein genau vorgebbarer Abstand der beiden Platten 2, 3 im Bereich der Stellschraube 8 einstellen, so dass sich im Zusammenspiel mit dem ersten Gelenk 5 eine gewünschte Neigung in Bezug auf die erste horizontale Achse ergibt.

Die zweite Platte 4 ist mit der ersten Platte 3 in gleicher Weise über ein zweites Gelenk 9 verbunden. Dieses zweite Gelenk 9 ist ebenfalls als Biegeblech 6 ausgebildet. Dem zweiten Gelenk 9 gegenüberliegend ist eine weitere Stellschraube 8' vorgesehen, mit der die Neigung der zweiten Platte 4 in Bezug auf die zweite horizontale Drehachse, die in dieser Darstellung von vorne nach hinten verläuft, vorgebbar ist.

Mit der erfindungsgemäßen Nivelliereinrichtung lässt sich die horizontale Lage des Neigungssensors 1 mittels der beiden Stellschrauben 8, 8' mit höchster Genauigkeit einstellen. Dabei wird die Lage in Bezug auf die erste horizontale Achse mit der Stellschraube 8 und die Lage des Neigungssensors 1 in Bezug auf die zweite horizontale Achse unabhängig davon mit der Stellschraube 8' eingestellt. So kann eine fehlerfreie Ausrichtung des Neigungssensors 1 erfolgen.

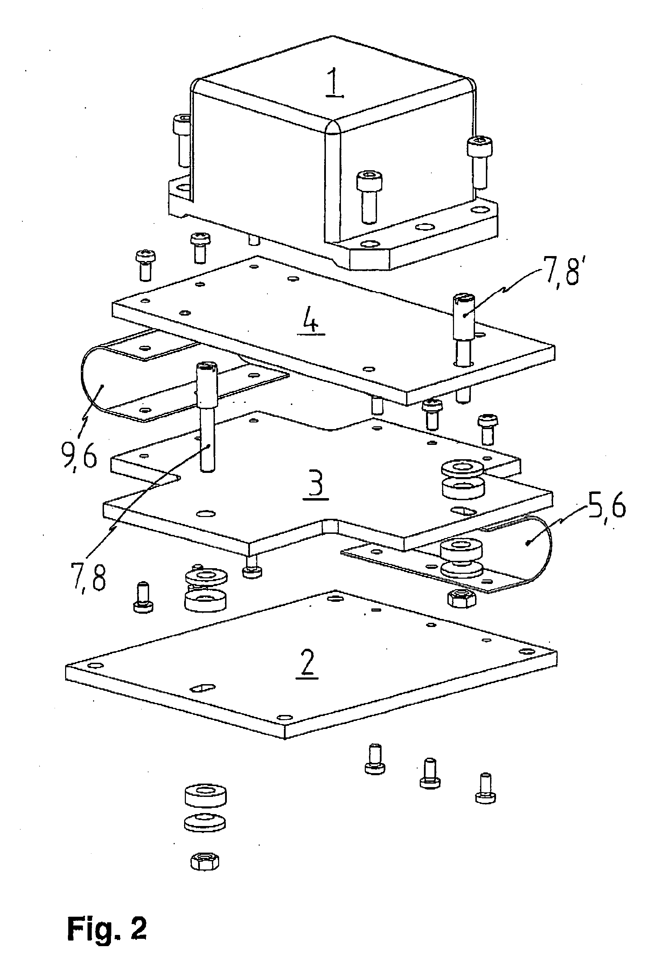

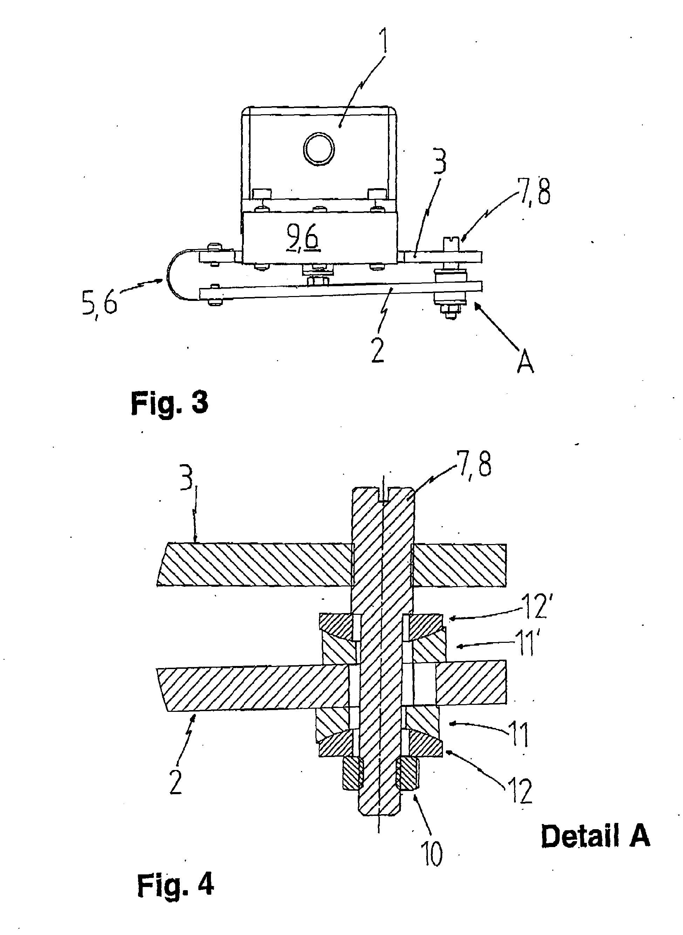

Fig. 2 zeigt eine Explosionsdarstellung der in Fig. 1 gezeigten Nivelliereinrichtung mit aufgenommenem Neigungssensor 1. In dieser Darstellung ist das erste Gelenk 5 besonders gut zu erkennen. Des Weiteren wird deutlich, dass die Längsachse der Gelenke 5, 9 und damit die horizontalen Drehachsen beide jeweils in einer horizontalen Ebene liegen und senkrecht zueinander orientiert sind. In Bezug auf die bereits genannten Bauteile wird zur Vermeidung von Wiederholungen auf die Erläuterungen zu Fig. 1 verwiesen. In Bezug auf die besonders vorteilhafte Konstruktion der Stellschrauben 8, 8' wird auf die Ausführungen zu Fig. 4 verwiesen.

Fig. 3 zeigt die linke Seitenansicht der Nivelliereinrichtung aus Fig. 1 und Fig. 2. In dieser Darstellung ist besonders gut das Zusammenwirken des ersten Gelenks 5 und der Stellschraube 8 bei der Einstellung der horizontalen Lage des Neigungssensors 1 in Bezug auf die erste horizontale Achse zu sehen. Zur Erleichterung der Einstellbarkeit können das erste Gelenk 5 und/oder das zweite Gelenk 9 so ausgestaltet sein, dass sie eine Federkraft auf die jeweils aneinander angelenkten Platten ausüben. Diese Federkraft kann in Richtung der Vergrößerung des Plattenabstands wirken, so dass die jeweiligen Platten von dem Abstandshalter 7 praktisch am Auseinanderschnellen gehindert werden.

Fig. 4 zeigt eine geschnitten dargestellte Vergrößerung des Details A aus Fig. 3. Dabei ist die Stellschraube 8 dargestellt, die zur Einstellung des Abstands zwischen der Grundplatte 2 und der ersten Platte 3 dient. Die Stellschraube 8 verfügt sowohl im oberen als auch im unteren Teil über ein Außengewinde. Die Stellschraube 8 verfügt zusätzlich am oberen Ende über einen Schlitzeingriff. In die für die Stellschraube 8 vorgesehene Bohrung in der ersten Platte 3 ist ein Innengewinde geschnitten. In dieses Innengewinde greift die Stellschraube 8 mit ihrem Außengewinde ein. Durch Drehen der Stellschraube 8 wird daher der Abstand der ersten Platte 3 zur Grundplatte 2 verändert.

Die Grundplatte 2 ist in Bezug auf die Stellschraube 8 fixiert. Dazu ist am unteren Ende der Stellschraube 8 eine Gewindemutter 10 aufgeschraubt, die über mehrere Unterlegscheiben die Grundplatte 2 festlegt.

Auf beiden Seiten der Grundplatte 2 sind um die Stellschraube 8 jeweils eine innere Unterlegscheibe 11, 11' und eine äußere Unterlegscheibe 12, 12' angeordnet. Dabei weisen die inneren Unterlegscheiben 11, 11' in Richtung der Außenseite eine Oberfläche auf, die dem Negativ einer Kugel bzw. eines Paraboloids entspricht. Die äußeren Unterlegscheiben 12, 12' weisen hingegen in Richtung der Innenseite eine Kugel- bzw. Parabelform auf. So können die jeweiligen Oberflächen der Unterlegscheiben aneinander abgleiten, falls sich die Winkelstellung der Stellschraube 8 gegenüber der Grundplatte 2 ändert. Dadurch tritt trotz einer Änderung des Winkels zwischen der Grundplatte 2 und der ersten Platte 3 keine unerwünschte Biegespannung in der Stellschraube 8 auf.

Hinsichtlich weiterer vorteilhafter Ausgestaltungen der erfindungsgemäßen Nivelliereinrichtung sowie der erfindungsgemäßen mobilen Wiegeeinrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Nivelliereinrichtung lediglich zur Erörterung der beanspruchten Lehre dient, diese jedoch nicht auf die Ausführungsbeispiel einschränkt.

### Bezugszeichenliste

- 1: Neigungssensor
- 2: Grundplatte
- 3: erste Platte
- 4: zweite Platte
- 5: erstes Gelenk
- 6: Biegeblech
- 7: Abstandshalter
- 8, 8': Stellschraube
- 9: zweites Gelenk
- 10: Gewindemutter
- 11, 11': innere Unterlegscheibe
- '12, 12': äußere Unterlegscheibe

## Patentansprüche

1. Nivelliereinrichtung zur Einstellung der horizontalen Lage einer Vorrichtung, insbesondere eines Neigungssensors (1), wobei die Vorrichtung auf der Nivellierein-richtung anordenbar ist,
**dadurch gekennzeichnet, dass** die Lage der Vorrichtung in Bezug auf eine erste horizontale Achse unabhängig von der Lage der Vorrichtung in Bezug auf eine zweite horizontale Achse einstellbar ist.

2. Nivelliereinrichtung nach Anspruch 1, **dadurch gekennzeichnet, dass** die erste horizontale Achse und die zweite horizontale Achse im Wesentlichen senkrecht zueinander orientiert sind.

3. Nivelliereinrichtung nach Anspruch 1 oder 2, **gekennzeichnet durch** eine erste Platte (3), die um die erste horizontale Achse schwenkbar an einer Grundplatte (2) oder dergleichen Unterlage angelenkt ist, wobei die Platten (2, 3) im Wesentlichen parallel angeordnet sind.

4. Nivelliereinrichtung nach Anspruch 3, **gekennzeichnet durch** eine zweite Platte (4), die um die zweite horizontale Achse schwenkbar an der ersten Platte (3) angelenkt ist, wobei die Platten (3, 4) im Wesentlichen parallel angeordnet sind.

5. Nivelliereinrichtung nach Anspruch 3 oder 4, **dadurch gekennzeichnet, dass** die erste Platte (3) mit der Grundplatte (2) und/oder die zweite Platte (4) mit der ersten Platte (3) über jeweils ein Gelenk (5, 9) verbunden ist.

6. Nivelliereinrichtung nach Anspruch 5, **dadurch gekennzeichnet, dass** das Gelenk (5, 9) bzw. die Gelenke (5, 9) die verbundenen Platten (2, 3, 4) mit einer in Richtung der Vergrößerung des Plattenabstands wirkenden Kraft beaufschlagen.

7. Nivelliereinrichtung nach Anspruch 6, **dadurch gekennzeichnet, dass** das Gelenk (5, 9) bzw. die Gelenke (5, 9) eine Feder, insbesondere ein Biegeblech (6), aufweisen.

8. Nivelliereinrichtung nach einem der Ansprüche 3 bis 7, **dadurch gekennzeichnet, dass** der horizontale Abstand der ersten Platte (3) und der Grundplatte (2) und/oder der horizontale Abstand der zweiten Platte (4) und der ersten Platte (3) über jeweils einen Abstandshalter (7), insbesondere eine Stellschraube (8, 8'), einstellbar ist.

9. Nivelliereinrichtung nach Anspruch 8, **dadurch gekennzeichnet, dass** der bzw. die Abstandshalter (7) so ausgebildet ist bzw. sind, dass die Platten (2, 3, 4) unabhängig von dem durch die Platten (2, 3, 4) gebildeten Winkel beabstandbar sind.

10. Mobile Wiegeeinrichtung, **gekennzeichnet durch** eine Nivelliereinrichtung nach einem der Ansprüche 1 bis 9.

11. Mobile Wiegeeinrichtung nach Anspruch 10, **gekennzeichnet durch** einen Neigungssensor (1).

12. Mobile Wiegeeinrichtung nach Anspruch 11, **dadurch gekennzeichnet, dass** der Neigungssensor (1) auf der zweiten Platte (4) der Nivelliereinrichtung angeordnet ist.

13. Mobile Wiegeeinrichtung nach einem der Ansprüche 10 bis 12, **dadurch gekennzeichnet, dass** die Nivelliereinrichtung abgekapselt und/oder versiegelt ist.

14. Mobile Wiegeeinrichtung nach einem der Ansprüche 10 bis 13, **dadurch gekennzeichnet, dass** die mobile Wiegeeinrichtung als Hebebühne, insbesondere zur Beladung von Flugzeugen, ausgebildet ist.

15. Mobile Wiegeeinrichtung nach einem der Ansprüche 10 bis 13, **dadurch gekennzeichnet, dass** die mobile Wiegeeinrichtung als Leiter, Gerüst oder dergleichen ausgebildet ist.
